# EUROPEAN PATENT SPECIFICATION

(11) **EP 3 837 809 B1**
(45) Date of publication and mention of the grant of the patent: **08.04.2026**
(21) Application number: 18758566.6
(22) Date of filing: 14.08.2018
(51) Int. Cl.: H04L 12/40, H04W 28/02

(54) **MUTUAL 3GPP-TSN QOS ADAPTION AND SHAPING**
ANPASSUNG UND FORMUNG VON GEGENSEITIGER 3GPP-TSN-DIENSTGÜTE
ADAPTATION ET MISE EN FORME DE QUALITÉ DE SERVICE (QOS) DE PROJET DE PARTENARIAT DE TROISIÈME GÉNÉRATION (3GPP)-RÉSEAUTAGE SENSIBLE AU TEMPS (TSN) (3GPP-TSN) MUTUELLE

(43) Date of publication of application: 23.06.2021
(73) Proprietor: Nokia Solutions and Networks Oy, 02610 Espoo (FI)
(72) Inventor: MANNWEILER, Christian, 81737 Munich (DE); GAJIC, Borislava, 82008 Unterhaching (DE); ROST, Peter, 69124 Heidelberg (DE); MARKWART, Christian, 81667 Munich (DE); SIVASIVA GANESAN, Rakash, 82008 Unterhaching (DE)
(74) Representative: TBK
(86) International application number: PCT/EP2018/072046
(87) International publication number: WO 2020/035133

(56) References cited:
- WO-A1-2009/089455
- NEUMANN ARNE ET AL: "Towards integration of Industrial Ethernet with 5G mobile networks", 2018 14TH IEEE INTERNATIONAL WORKSHOP ON FACTORY COMMUNICATION SYSTEMS (WFCS), IEEE, 13 June 2018 (2018-06-13), pages 1 - 4, XP033369592, DOI: 10.1109/WFCS.2018.8402373
- "3rd Generation Partnership Project; Technical Specification Group Core Network and Terminals; 5G System; Interworking between 5G Network and external Data Networks; Stage 3 (Release 15)", 3GPP STANDARD; TECHNICAL SPECIFICATION; 3GPP TS 29.561, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V0.5.0, 26 April 2018 (2018-04-26), pages 1 - 42, XP051451185
- AHMED NASRALLAH ET AL: "Ultra-Low Latency (ULL) Networks: A Comprehensive Survey Covering the IEEE TSN Standard and Related ULL esearch", 20 March 2018 (2018-03-20), XP055563110, Retrieved from the Internet <URL:https://ieeexplore.ieee.org/iel7/9739/5451756/08458130.pdf> [retrieved on 20190228]
- NOKIA ET AL: "Integration of the 5G System in a TSN network", vol. SA WG2, no. Sophia Antipolis; 20180820 - 20180824, 14 August 2018 (2018-08-14), XP051537039, Retrieved from the Internet <URL:http://www.3gpp.org/ftp/tsg%5Fsa/WG2%5FArch/TSGS2%5F128BIS%5FSophia%5FAntipolis/Docs/S2%2D188100%2Ezip> [retrieved on 20180814]

## Description

### Field of the invention

The present invention relates to an apparatus, a method, and a computer program product related to transparent integration of a wireless network (e.g. a 3GPP network) into a wireline network (e.g. a TSN network).

### Background of the invention

Time sensitive networking (TSN) [1] is being standardized by IEEE (Institute of Electrical and Electronics Engineers) 802.1 to provide industrial networks with deterministic delay to handle time sensitive traffic. Currently, wired links are assumed for connecting the sensors and controllers. Moving from wired to wireless sensors and actuators provide advantages, such as mobility, scalability, low cost maintenance etc. To connect the wireless devices to a TSN network, wireless transmission mechanisms such as defined in 3GPP (3^{rd} Generation Partnership Project) are necessary.

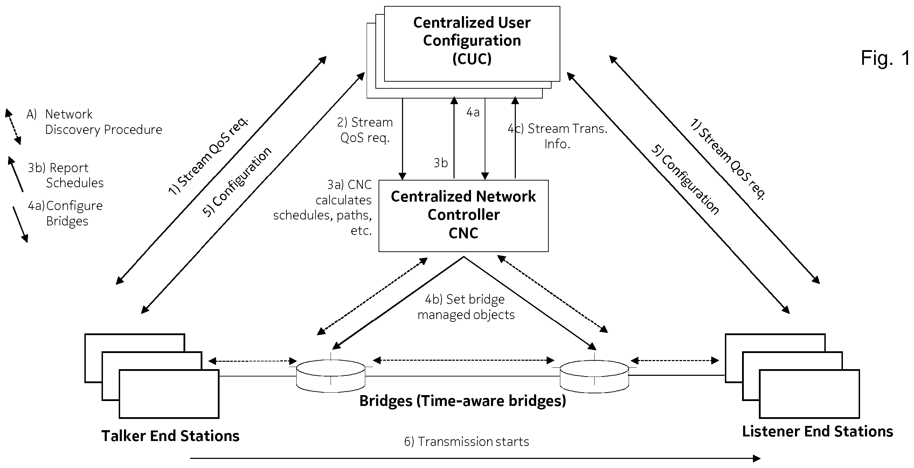

Fig. 1 shows the entities involved in TSN. One of the key consideration for TSN standardization is to have a centralized entity, named CNC (Centralized Network Controller), which collects the requirements of end to end communication between the Talker End Stations and Listener End Stations and performs scheduling centrally. The Bridges learn the connection information for their immediate network peer in each physical port using the link layer discovery protocol (LLDP). Each TSN network has a single CNC. In addition, there might be multiple centralized user configurators (CUCs) which translate the requirements of the end to end communication and communicate it to the CNC. Furthermore, the CUC is responsible for configuring the respective Talker and Listener End Stations with transmission parameters computed by the CNC during the scheduling process. The solid arrows in Fig. 1 describe the main steps 1-6 involved in establishing a communication between a Talker and a Listener End Station [2].

Namely, according to 1), CUC obtains the stream Quality of Service (QoS) requirements from the end stations. Then, according to 2) CUC provides the stream QoS requirements to CNC. In 3a) CNC calculates schedules, paths etc. (hereinafter summarized as "schedule") in order to fulfil the stream QoS requirements, which are reported to CUC in 3b). In 4a) and 4b), CUC configures, via CNC, the managed objects of the bridges accordingly. CNC informs in 4c) CUC about successful configuration of the bridges. Namely, Stream Trans. Info contains the configuration parameters that the Talker End Station needs to use e.g. destination MAC address, VLAN ID and PCP field. It also has the transmit time window in which the Talker should transmit and the receive time window in which the listener should expect to receive the packets. Then, in 5) CUC configures the end stations accordingly. In parallel, as shown by dashed lines in Fig. 1, network discovery procedures run between related entities (i.e., between neighboured bridges, between each bridge and CNC, and between each station and the respective bridge it is connected to). After that, in 6), transmission between talker end stations and listener end stations may be performed.

Note that the bridges are time-aware in a TSN network. There may be one or more bridges between a talker end station and a respective listener end station. In Fig. 1, two bridges are shown as an example. Each talker end station may talk to one or more listener end stations, and each listener end station may listen to one or more talker end stations. A listener end station of one communication may be a talker end station of another communication.

Currently, in industries, TSN is used as a mechanism to provide end to end connectivity with deterministic capacity and delay. The talkers (e.g., sensors, controllers) and listeners (e.g. controllers, actuators) are connected through bridges using cables.

Time sensitive networking (TSN) [1] is currently standardized as the mechanism for communication within industrial networks. A set of IEEE 802.1 protocols [3] (IEEE 802.1AS-Rev, 802.1CB, 802.1Qcc, 802.1Qch, 802.1Qci, 802.1Qcj, 802.1CM, 802.1Qcp, 802.1Qcr, 802.1AB) is applied to achieve deterministic data transmission with guaranteed low latency with time-aware devices (which need to be configured properly).

3GPP started in 2017 a study on communication for Automation in Vertical Domains to identify respective requirements for wireless communication [4], [5]. So far, neither 3GPP Rel. 15 nor Rel. 16 include solutions on integrating 3GPP networks with TSN.

### References:

[1] R. Hummen, S. Kehrer, O. Kleineberg, "TSN - Time Sensitive Networking", White Paper, Hirschmann
[2] IEEE 802.1Qcc, Stream Reservation Protocol (SRP) Enhancements and Performance Improvements, http://www.ieee802.org/1/pages/802.1cc.html
[3] http://www.ieee802.org/1/
[4] 3GPP, TS 23.501 V15.0.0 "System Architecture for the 5G System; Stage 2 (Release 15)", Dec. 2017
[5] 3GPP TR 22.804 V1.0.0 "Study on Communication for Automation in Vertical Domains (Release 16)", Dec. 2017
[6] PCT/EP2018/054916
[7] E. Gardiner et al. , "Theory of Operation for TSN-enabled Systems applied to Industrial Markets", Avnu Alliance, 2017
[8] PCT/EP2018/061892

Further cited prior art documents are NEUMANN ARNE ET AL: "Towards integration of Industrial Ethernet with 5G mobile networks", 2018 14TH IEEE INTERNATIONAL WORKSHOP ON FACTORY COMMUNICATION SYSTEMS (WFCS), IEEE, 13 June 2018 (2018-06-13), pages 1-4, WO 2009/089455 A1, "3rd Generation Partnership Project; Technical Specification Group Core Network and Terminals; 5G System; Interworking between 5G Network and external Data Networks; Stage 3 (Release 15)", 3GPP STANDARD; TECHNICAL SPECIFICATION; 3GPP TS 29.561, 3rd GENERATION PARTNERSHIP PROJECT (3GPP), MOBILE COMPETENCE CENTRE; 650, ROUTE DE LUCIOLES; F-06921 SOPHIA-ANTIPOLIS CEDEX; FRANCE, vol. CT WG3, no. V0.5.0, 26 April 2018 (2018-04-26), pages 1-42 and Ahmed Nasrallah ET AL: "Ultra-Low Latency (ULL) Networks: A Comprehensive Survey Covering the IEEE TSN Standard and Related ULL esearch", 20 March 2018 (2018-03-20).

### Summary of the invention

It is an object of the present invention to improve the prior art. The invention is defined by the attached independent claims. Further embodiments are defined in the dependent claims.

According to some embodiments of the invention, at least one of the following advantages may be achieved:
- resources are efficiently used in TSN network and 3GPP network;
- resource utilization may be adapted to policies for TSN network and 3GPP network;
- modifications to the TSN network and the 3GPP network are not required.

### Brief description of the drawings

Further details, features, objects, and advantages are apparent from the following detailed description of the preferred embodiments of the present invention which is to be taken in conjunction with the appended drawings, wherein:
Fig. 1 shows a functional and simplified diagram of a TSN network including a flow of commands;
Fig. 2 shows a functional and simplified diagram of a TSN network using a wireless communication service based on 3GPP;
Fig. 3 shows an example implementation of a 3GPP network integrated into a TSN network;
Fig. 4 shows an example flow diagram for option 1 according to some embodiments of the invention;
Fig. 5 shows an example flow diagram for option 2 according to some embodiments of the invention;
Fig. 6 shows an example flow diagram for quality masking according to some embodiments of the invention;
Fig. 7 shows an apparatus according to an embodiment of the invention;
Fig. 8 shows a method according to an embodiment of the invention;
Fig. 9 shows an apparatus according to an embodiment of the invention;
Fig. 10 shows a method according to an embodiment of the invention;
Fig. 11 shows an apparatus according to an embodiment of the invention;
Fig. 12 shows a method according to an embodiment of the invention; and
Fig. 13 shows an apparatus according to an embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

The first part of the following description is substantially taken from PCT/EP2018/054916 and PCT/EP2018/061892. The present application provides an improvement over this former application and also over PCT/EP2018/061892 in terms of resource usage.

In the present application, sometimes the term "data flow" is used. This term summarizes a "stream" in the TSN network and its corresponding "QoS flow" in the 3GPP network. That is, if the term "data flow" is used in connection with the 3GPP network, "data flow" means "QoS flow" in the usual 3GPP terminology. If the term "data flow" is used in connection with the TSN network, "data flow" means "stream" in the usual TSN terminology.

In a main target scenario, the tactile industrial network, also known as Industrial loT (IIoT) or Industry 4.0 networks, 3GPP technologies are applied in addition to wired time sensitive networking (TSN) in industrial environments to provide flexibility (in terms of mobility) and scalability (in terms of number of sensors or actuators).

The introduction of wireless devices provides more flexibility, cost effectiveness and scalability in the system, but requires for example a wireless network as defined by 3GPP to provide predictable QoS for the communication. TSN and 3GPP networks are developed and standardized as two disjoint domains which are managed independently. To support a wireless connection based on 3GPP technology, only either of these two standards is supported in a network. There are no over-arching entities or concepts developed in order to handle the interaction between these two domains.

A TSN End Station "A" communicates with a TSN End Station "B" via a time sensitive communication link of a TSN Network to use a wireless communication service based on 3GPP technologies. A TSN Translator and a TSN Translator Client, which acts on behalf of the TSN Translator integrate a 3GPP network into the TSN network domain in a transparent manner. I.e., to the TSN network, the wireless communication service of a 3GPP network acts similar to a TSN bridge, while the TSN network acts as a data service to the 3GPP network.

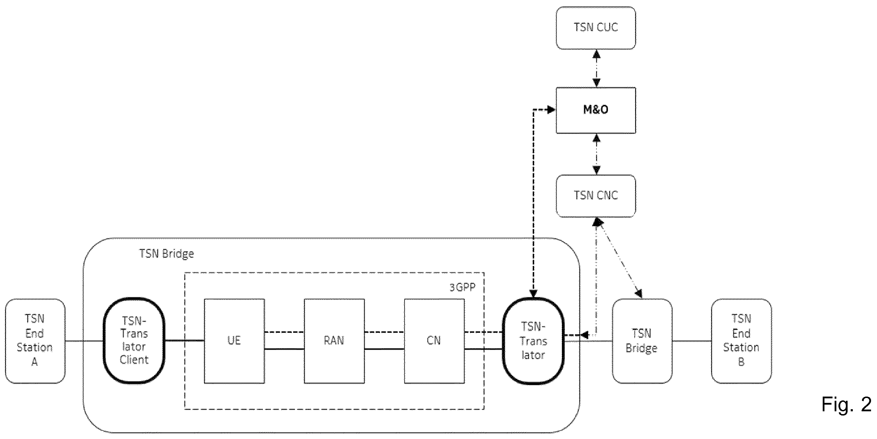

Fig. 2 shows the general concept of the TSN Translator and its TSN Translator Client and how the TSN End Station A is connected to the TSN network via a wireless connection service provided by the 3GPP network. Fig. 2 corresponds to Fig. 1, but one of the bridges is replaced by the 3GPP network embedded between the TSN translator and the TSN translator client. In addition, Fig. 2 shows a Management & Orchestration (M&O) entity of the 3GPP network, which is inserted between TSN CUC and TSN CNC. M&O may intercept messages between TSN CNC and TSN CUC. The role of M&O is explained later.

In Fig. 2 the entities of the TSN network are shown by round edged boxes and those of the 3GPP network are shown by sharp edged boxes. The UE, RAN and CN together constitute the 3GPP network which is enclosed within a dashed line box. The solid lines connecting the entities represent the data plane and the dotted lines the control plane. The TSN translator and TSN translator client shown by bold rounded boxes enable the transparent integration of the TSN network and the 3GPP network. The round edged box consisting of TSN translator, TSN translator client, and 3GPP network constitute the logical TSN bridge formed on top of the 3GPP network. Note: For simplicity, the communication paths of the TSN CUC with the TSN End Stations A and B are not shown in Fig. 2.

The TSN End Station A is connected to a UE via the TSN Translator Client. The UE is responsible to establish and handle the wireless connection service for the TSN End station A. The wireless connection service contains beside the wireless link between UE and Radio Access Network (RAN) also essential Core Network (CN) services to provide for example authentication, mobility, QoS, etc.

For the transparent usage of the wireless connection service and to hide specific behavior of the 3GPP network to the TSN network and vice versa, a TSN translator function is provided, which works as an intermediator between both domains, i.e. it understands the TSN protocol and maps the TSN CUC and TSN CNC messages as well as the TSN network messages into control and user plane messages of the 3GPP network to trigger corresponding actions in the 3GPP network, e.g. to trigger the establishment of a wireless connection with guaranteed QoS, and vice versa. Furthermore, it takes cares of services like the enforcement of the priority classes for the traffic, frame translation, time gating etc which are typically offered by the bridges in the wired network to guarantee deterministic communication. With respect to this view, the TSN Translator and TSN Translator client are placed on both sides of the 3GPP network, the UE side and the CN side.

The TSN Translator and the TSN Translator Client are logically part of the same translation between 3GPP and TSN network and hence, it is beneficial that they do not act independently. Treating them as one entity allows to hide the TSN Translator at the UE side to the TSN network and to use the TSN Translator at the CN side to represent the complete 3GPP network as a TSN bridge to the TSN Network. This simplifies especially the configuration and handling at the TSN CNC and the respective TSN CUCs. The TSN translator performs the major part of the translation of the TSN protocols to 3GPP commands and procedures and vice versa. The TSN Translator client at the UE side acts on behalf of the TSN Translator at the CN side and is therefore called TSN Translator Client.

The integration of the TSN Translator with the TSN network is done by implementing the protocols for an TSN bridge, the TSN ethernet protocol to exchange messages between a TSN bridge with another TSN ethernet bridge or TSN End Station B (user plane traffic, also called data traffic) and the protocol to exchange information with the TSN CNC (control plane). Additionally, the respective communication of the TSN End Station A with the TSN CUC is also handled via the TSN Translator and its TSN Translator Client.

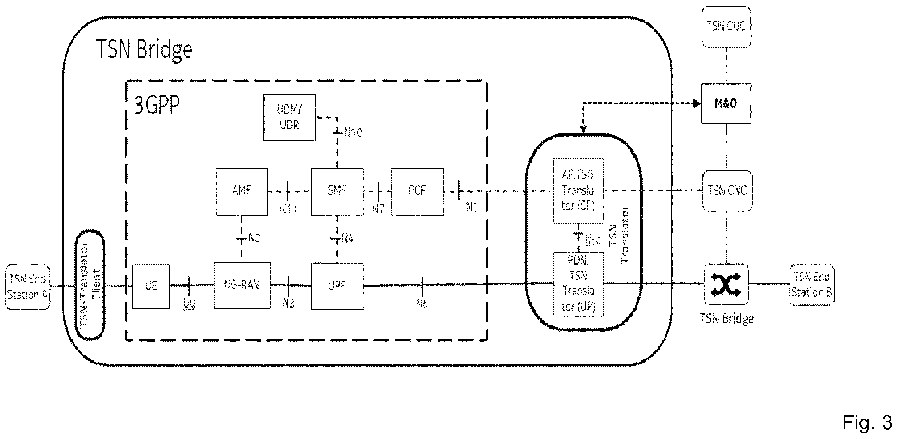

Fig. 3 shows an example implementation for integrating TSN network with a 3GPP network. The entities in the 3GPP network, shown within the dashed box labelled 3GPP, are possible functional entities resulting from the 3GPP release 15 standardization. This example could be mapped to other 3GPP releases or non-3GPP wireless networks. Again, the role of the 3GPP M&O entity is explained later. The TSN End Stations A and B could be a sensor, controller, actuator or any other industrial device. In this picture, UE is shown as a separate entity, however, it could be either integrated in the End Station A or can be plugged in to the TSN End Station. Similarly, the TSN Translator Client could also be an integrated part of TSN End Station A, UE, or both.

In Fig. 3, TSN Translator and its TSN Translator Client work as an intermediator between both domains, i.e., it understands the TSN protocol and the 3GPP protocols and maps the TSN commands and messages into corresponding actions and messages in a 3GPP network providing 5G and vice versa.

Two key types of information messages are differentiated by the TSN Translator:
1) The network configuration related messages of the TSN network we denote in the following by the term control plane (CP) (see also in Fig. 3) in order to be consistent with the naming convention of mobile network terminology. The CP messages, e.g. link layer discovery protocol messages are converted into the corresponding control plane messages and procedures in a 3GPP network. The control plane messages and procedures are used to establish for example a new protocol data unit (PDU) session or a new QoS flow and to provide for example required QoS parameters for the QoS flow within the PDU session. The TSN translator has an interface to respective 3GPP functional entities of the core network (CN), e.g. in Fig. 3 the policy control function (PCF) of a 5G network, which interacts directly or indirectly with further 3GPP CN functional entities like Session Management Function (SMF) and Access & Mobility Management Function (AMF). The TSN Translator acts from the 3GPP network point of view as Application Function (AF) and uses the N5 interface. In addition, the TSN Translator derives information provided by its TSN Translator Client and the AF to act as a TSN Bridge in the TSN network. A typical example is the Link Layer Discovery protocol required at a TSN bridge to be interoperable with the TSN network.
   Alternatively, other options, which are not shown in Figure 3 may be used to interact between 3GPP CN and TSN Translator. The TSN Translator may provide an interface to the Network Exposure Function (NEF) when authentication and authorization features are needed, or a new functional entity in 3GPP domain could be created which provides the functionality of the TSN Translator in a standardized way. SBI (service based interfaces) may also be used to realize interfaces to the TSN Translator function.
2) For the transmission of data between the End Station A and End Station B, the TSN Translator has an interface to the User Plane Function (UPF) and the corresponding interface to the TSN Bridge that connects to the TSN End Station B, which we denote in the following by the term user plane (UP), again to align with the terminology applied in 3GPP networks. In Fig. 3, the UP of the TSN translator acts as a data network to the 3GPP network. On the other side, for the adjacent TSN Bridge and for CNC, it looks like a TSN bridge. With respect to the user plane functionality, the TSN translator shall offer e.g. one or more of the following functions:
   a. Removes the header information from the IP packets received at UPF and create the corresponding TSN packet
   b. Maps the packets received in a particular PDU session to the packets to be transmitted from the corresponding egress port
   c. Depending on the QoS flow of the given PDU session, place the packet in the corresponding priority queue of a specific port
   d. Based on the gate control list specified by the CNC, it shall transmit the packets from one of the different queues through the egress port. The gate control list specifies at which time interval a packet from a specified priority queue can be transmitted at a particular egress port.

Similar translation shall be performed when the TSN packets arrive at the TSN translator ingress ports. The priority queues shall be implemented at the translator or the translator client or both.

Similar to the TSN Translator, CP and UP translation is performed by the TSN Translator Client. The TSN Translator Client works on behalf of the TSN Translator so that the TSN Translator Client, 3GPP network and TSN Translator together appear to be a TSN bridge for the TSN network and the TSN End Station A.

The approach in PCT/EP2018/054916 offers a simple and effective solution for integration between TSN and 3GPP network, but at the cost of suboptimal resource reservation in the 3GPP network. Namely, in the phase of network discovery, in order to identify the capabilities of 3GPP part of the network (3GPP bridge), for each UE the establishment of at least one PDU session potentially needed in the future takes place. Although the established PDU sessions will be only used once the actual stream request from corresponding end station is issued, the resources in 3GPP network are already reserved during the network discovery phase. This provisional resource reservation may imply suboptimal resource exploitation and may lead to a rapid exhaustion of resources and inability of the network to support the incoming service requests. In other words, the simple and yet effective approach in PCT/EP2018/054916 might be inefficient from resource management point of view and consequently might face scalability issues.

The solutions described in PCT/EP2018/061892 are build upon the solution described in PCT/EP2018/054916. In terms of the apparatus, they provide an additional communication interface between the TSN Translator described in PCT/EP2018/054916 and the 3GPP Network Management and Orchestration (M&O) entity, as depicted in Figs. 2 and 3. Such interface enables the exchange of information between M&O and TSN Translator for optimization of resource reservation and allocation in a 3GPP network. The M&O entity is logically placed between TSN CUC and TSN CNC, and can "intercept" the messages between TSN CUC and TSN CNC. Having the wider information about the TSN network, i.e. available devices, their capabilities, available resources and their utilization, actual stream requests etc., M&O complements the TSN Translator function of PCT/EP2018/054916 by providing information and instructions for implementation of more efficient resource allocation in the 3GPP network during TSN 'network discovery' and 'stream setup' procedures. The communication between M&O and TSN translator belongs to the management plane. The management plane refers mainly to functions and procedures to operate and monitor the network in the sense of fault, configuration, accounting, performance, security (FCAPS) management.

More specifically, M&O can interact with the TSN Translator to indicate the desired amount of resources to be reserved/guaranteed by 3GPP network during TSN network discovery phase, i.e., before the actual stream requests are issued. Hence, PCT/EP2018/061892 proposes two options for such interaction between M&O and TSN Translator, namely:
*a. M&O provides at least one (but potentially a set of) estimated QoS values for a 3GPP bridge (e.g. learned from previous setups or based on network planning, or based on end station type etc.) without necessarily requesting actual establishment of PDU sessions and reservation of resources; or*
*b. M&O intercepts stream requests issued by the TSN CUC towards the TSN CNC, based on which it can derive the requirements for the 3GPP network, and then requests establishment of according PDU sessions.*

In order to perform the translation between TSN and 3GPP network, the TSN translator relies on information and instructions provided by M&O. The M&O entity has wider information about the 3GPP network in terms of devices, their requirements and capabilities, available resources and their utilization, traffic patterns, geo-locations of users and resources, etc. In the process of network discovery [6], CNC gathers the information about bridge and link delays. According to PCT/EP2018/054916, all PDU sessions that are possibly needed in future (at least one PDU session per UE) are established and the according QoS information is reported to CNC. In contrast, according to PCT/EP2018/061892, M&O offers at least one of the above mentioned two options for handling the process of network discovery, thus making it more efficient.

Following any of the two interaction options, M&O instructs the TSN Translator on number of PDU sessions to be established in the 3GPP network and/or 3GPP QoS values to be translated to TSN parameters (e.g. Bridge Delay) of 3GPP bridge.

After any change in the network that may affect already signaled parameters of 3GPP bridge, e.g. admission of additional UEs and new end stations, M&O may provide to TSN Translator corresponding updates. E.g., either it updates the estimated QoS values for 3GPP bridge or requests the PDU session setup with updated QoS values.

The TSN Translator (and its TSN Translator Client) may provide the following functions:
1. The TSN Translator and its TSN Translator Client are enabled to initiate PDU sessions and QoS flows with a set of pre-defined QoS parameter, e.g. 5G QoS indicator (5QI), in the 3GPP network, which are used to exchange information between TSN Translator Client and TSN Translator. The PDU sessions and respective QoS flows are used to transport information between:
   [1] TSN End Station A and TSN CUC (e.g. authentication and authorization)
   [2] TSN Translator and its TSN Translator Client (e.g. link layer discovery protocol)
   [3] TSN End Station A and TSN End Station B (e.g. measurement data from a sensor to a controller)
2. The UE connected to the TSN Translator Client establishes the wireless connection to the 3GPP Core Network domain, based on standardized 3GPP authentication and authorization procedures. The TSN Translator Client, which is connected to the UE may provide additional credentials allowing to check if the UE and TSN Translator Client together are authorized to establish a wireless connection. Optionally, the TSN Translator Client provides further credentials of the connected TSN End Station A that is added to the credentials.
3. The 3GPP network allows to establish additional PDU sessions and QoS flows for existing and/or the new PDU sessions with a set of pre-defined QoS parameter (e.g. 5QI), which is controlled by a Policy Control Function PCF **upon instruction by the M&O entity.** M&O entity derives such instructions based on the information about e.g. available end stations, their mapping to UEs, topological constraints, communication requirements of end stations (e.g. on required minimum or average throughput), traffic pattern (e.g. cyclic data), maximum or average allowed packet loss, maximum or average latency, and/or jitter. A typical PDU session may define a maximum delay (e.g. 10 ms) and further information, which needs to be guaranteed with high probability (e.g. 99.999%) and minimum guaranteed bit rate (e.g. at least 1 Mbps).
4. The TSN Translator and its TSN Translator Client supports the Link Layer Discovery Protocol (LLDP) and participates in the network discovery procedure executed by the TSN CNC. The PDU session and the QoS flow represent the connection between the UE and the UPF. This information is mapped to TSN Bridge managed objects' parameters, which are then reported by the TSN Translator to the TSN CNC. **Also in the case that no PDU session is established, i.e. M&O entity only provided estimated QoS values for 3GPP network, such values are also mapped to TSN Bridge managed object's parameters.**
5. The TSN Translator and its TSN Translator Client has at least one of the following functions:
   [1] Mapping of control plane information from the TSN network and the TSN End Stations to 3GPP control plane information
   [2] Mapping of control plane information from the TSN network and the TSN End Stations to information exchanged between TSN Translator and its TSN Translator Client
   [3] Mapping of control plane information from the 3GPP network to information exchanged between TSN Translator and TSN Translator Client, and TSN network and the TSN End Stations
   [4] Handling of TSN user plane, including the time gating at the egress port and the ingress port
   [5] Handling of Time Synchronization in the TSN network
   [6] Access control for TSN end station
   [7] Mapping of information provided by M&O entity to the 3GPP control plane information (in particular mapping of TSN QoS values to required PDU sessions and according QoS flows)
   [8] From [7], derivation of Bridge Delay object for 3GPP bridge
   [9] Mapping of PDU sessions from [7] to TSN port information (e.g. MAC address of the bridge's sending port, c.f. PCT/EP2018/054916
   [10] TSN Translator provides information from [9] to TSN Translator Client
6. The 3GPP network may provide multiple PDU sessions for the UE connected to the TSN Translator Client to realize at least one wireless connection in the 3GPP network. Each PDU session may contain multiple QoS flows with a defined set of QoS parameters for each. The TSN Translator and its TSN Translator Client maps each QoS session and its QoS parameters to TSN Bridge managed object's parameters and reports them to the TSN CNC to allow more flexible options for the computed schedule.

In the following, an example way of interaction is described, i.e. how the TSN Translator and its TSN Translator Client interact with the 3GPP network and its entities (in particularly, M&O) when providing a wireless communication service to a TSN network and its TSN entities. For simplification and a better understanding, it is assumed that the TSN CP traffic is handled in a default 3GPP PDU session with respective QoS flow(s) and further PDU sessions with respective QoS flows handle the TSN UP traffic.

### Initial setup of 3GPP-TSN network

The procedure of initial setup of 3GPP-TSN network for the purpose of TSN end station authentication follows the steps described in PCT/EP2018/054916. In addition, according to PCT/EP2018/061892:
1) All available information about devices (UEs and TSN end stations) (or a reasonable subset thereof, such as TSN end station ID, UE IMSI, UE category, allowed PDU session types and the default PDU session type, default 5QI values, SSC (session and service continuity) mode, static IP address/prefix, geolocation, applications hosted/used by the station, traffic profile (such as probability distribution of traffic volume), mobility profile, etc.) is provided to M&O entity already during the network planning phase and collected in a database. I.e., this information is provided to M&O during the step in which an engineer prepares TSN network (e.g. inserting end station ID into CUC) and 3GPP network (e.g. specifying IMSI, 5QI for default PDU session to UDM).
2) After a successful authentication of TSN end station by the CUC the acknowledge message is sent back from CUC to the end station. The M&O intercepts the information about newly authenticated TSN end station. This may serve as a trigger for updating the QoS values of 3GPP bridge provided by M&O entity.

### Network discovery procedure

The LLDP protocol is executed by the TSN Bridges and the TSN End Stations A and B through which they learn about their direct neighbours. The LLDP protocol is executed in a regular interval so that the actual information about the neighbouring end stations and bridges is available and (mostly) up to date. The TSN Translator on the TSN network side and the TSN Translator Client on the TSN End Station A side also support the LLDP protocol and exchange the LLDP parameters (e.g., source and destination MAC address) with their neighbours in the TSN network. Additionally, TSN Translator provides to TSN Translator Client TSN port information, including the mapping of ports to PDU sessions and QoS flows.

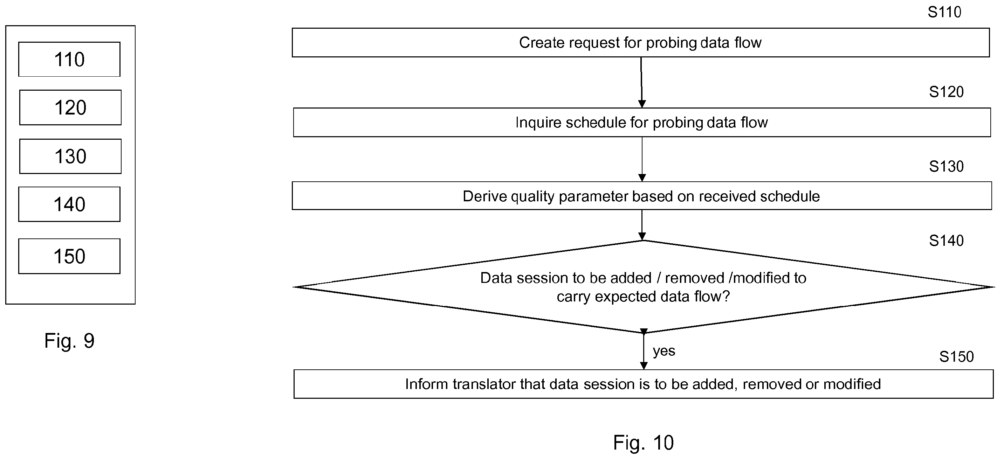

Typically, the CNC becomes aware of network topology by reading LLDP parameters and Bridge Delay objects from the TSN bridges. This information is not known to CUC, unless it is explicitly requested by CUC. The Figure 9 shows this general case of TSN network discovery.

TSN bridges and end devices perform the LLDP procedures learning the connection information of their network peers. Such information in stored in managed objects on bridges and it is read by the CNC. During the discovery process, the TSN CNC will crawl through all the TSN bridges to collect information about the links they are connected to, their capacity, link propagation delay, bridge delay and the devices attached to the ports available to them, from the bridge managed objects. As a result, the CNC builds a view on physical topology of the network along with performance metrics and capabilities of the bridges and links. Since 3GPP network appears as a virtual TSN bridge to the TSN CNC, the TSN Translator and its TSN Translator Client manages corresponding bridge objects so that the TSN CNC can read this information. The ingress ports of the virtual TSN Bridge offered to the TSN End Station A are handled by the TSN Translator Client and the corresponding egress ports are handled by the TSN Translator. At least one PDU session in 3GPP network represents the connection between one ingress port and one egress port of the virtual TSN Bridge. The QoS flows with the different QoS parameters is analogous to the QoS handling of the TSN network. During the network discovery procedure, the QoS values that represent the capabilities of 3GPP network are provided by M&O entity. Such QoS values are translated by the TSN Translator to Bridge Delay managed object. There are multiple options for M&O to establish and provide needed QoS parameters. In the following, an overview description of options for M&O involvement according to PCT/EP2018/061892 is provided.

According to some options in PCT/EP2018/061892, M&O provides a set of estimated/predetermined values of QoS values to TSN Translator. Such estimated values can be derived for example from previous stream settings, or from network planning information (e.g., collected in a database and processed using machine learning algorithms), or from a grouping of TSN end stations.
- According to one option in PCT/EP2018/061892, M&O intercepts stream requests issued by a CUC. Reading the requirements of the stream to be set up, it can derive the required PDU session(s) and QoS flows of the 3GPP system. An according session establishment request is sent to the TSN Translator, which in turn issues an PDU session establishment request to the 3GPP network. After receiving the acknowledgment that the PDU session(s) has (have) been established, the TSN translator maps the PDU session's 5QI values to the according Bridge Delay object parameters. M&O, upon receiving the ACK for successful PDU session establishment, forwards the stream requests to the TSN CNC which computes the schedule and paths for the requested stream(s). CNC returns this to CUC, but it is first intercepted by M&O in order to check for necessary updates of the PDU sessions established before. E.g. in case of failure to compute feasible schedule, the M&O can request such updates using the same procedure as for PDU session establishment, including update of Bridge Delay parameters. Afterwards, M&O triggers the re-computation of feasible schedule by re-submitting the original stream request to the CNC. Once the schedule has successfully been computed it is forwarded to the original recipient, the TSN CUC.
   Under assumption that the frequency with which the CNC performs the network discovery is high, the CNC always has "up to date" information about the network, hence no explicit trigger for network discovery is needed after the establishment of the new PDU sessions. Alternatively, the M&O can trigger CNC to perform such explicit network discovery every time the M&O received an acknowledgement for newly established PDU sessions.

### Establishment of end to end communication

For establishment of a communication between one (or multiple) talkers and one (or multiple) listeners, the TSN CUC reads the QoS parameters and stream requirements from the TSN End Stations A and B. In the usual TSN procedure, this information and the information about the TSN End Stations A and B (e.g. MAC addresses) to be connected are then provided to the TSN CNC. According to PCT/EP2018/061892, the M&O entity may intercept the Stream Request message in order to check whether existing (i.e., already established) PDU sessions can fulfil the requirements or if new/modified PDU session need to be set up. In the latter case the M&O instructs the TSN Translator to trigger the 3GPP network to set up PDU session(s), QoS flow(s), and/or update QoS flow parameters respectively. Only afterwards, the stream request is forwarded to TSN CNC.

Some embodiments of the invention provide a dynamic interaction between M&O and CNC in order to discover and take into account the capabilities and limits of the TSN part of the full network. Towards the CNC, the M&O appears as a CUC and uses the corresponding interfaces for the interaction between CUC and CNC. Based on the capabilities of the TSN part of the network, in terms of guaranteed delays and throughput, the M&O provides the TSN Translator corresponding TSN stream requirements applicable to the 3GPP part of the network, i.e. QoS values that the 3GPP bridge needs to guarantee.

*Hence, some embodiments of this invention may explore the TSN network capabilities and use this additional information to identify the QoS values for the PDU sessions that will fit to the E2E requirements of the stream requests. In addition, some embodiments of the invention may mask the 3GPP capabilities (largely the capabilities related to the radio interface) in order to trade off the "3GPP bridge" capabilities against TSN capabilities.*

Some embodiments of the invention deploy one or two of the following options for interaction between M&O and CNC, and consequently between M&O and TSN Translator, namely:
*1. M&O explicitly requests the TSN network topology. In the present application, the term "network topology" comprises not only topological information but also related QoS capabilities. In some embodiments, this request may include a request to CNC to perform network discovery. In some embodiments, whether or not network discovery is performed may depend on the up-to-date status of the network topology hold at CNC. If the stored network is younger than a predefined duration, network discovery is not needed and not performed, otherwise network discovery is performed.*
   *The CNC reads the bridge managed objects (including bridge delay and propagation delay) and sends back the information about TSN network capabilities. The M&O uses such information along with information about available devices and their capabilities (cf. [8]) in order to instruct the TSN Translator on QoS values to be reported to CNC and PDU sessions to be established. These extensions of procedures in [8] provide a means* of *interaction between 3GPP network and TSN network useful for a more resource efficient operation. Note: an explicit network topology discovery may be issued prior to actual stream requests and assures that the 3GPP network performs an a-priori reservation of resources for future streams.*
*2. M&O issues 'probing' stream requests (also named "flow request for a data flow") towards the TSN CNC for the purpose of probing the capabilities of the TSN network, typically without the actual intention of establishing those streams. The TSN CNC computes the schedules (using initial*/*default QoS values for the 3GPP bridge) and gives the feedback to M&O (acting* as *TSN CUC from TSN CNC's point of view). Based on such information regarding the whole network (TSN and 3GPP domain) the M&O can derive if and when the QoS provided by the 3GPP bridge needs to be adapted, i.e., which PDU sessions with corresponding 5QI values need to be established*/*terminated*/*adapted. Note: initial*/*default QoS values for the 3GPP bridge can be derived based on [8] e.g. Option 1.*
   *In some embodiments, the format of the TSN stream request message may contain a flag (e.g., extending the message by one bit), by which the stream request issuer can indicate whether it is a regular or a probing stream request, and the TSN CNC can act accordingly (the latter implies a modification to TSN procedures, see below for more details).*

Some embodiments of the invention are described with reference to Figs. 2 and 3. For simplification and a better understanding, it is assumed that (1) the TSN CP traffic is handled in a default 3GPP PDU session with respective QoS flow(s) and (2) further PDU sessions with respective QoS flows handle the TSN UP traffic. In order to perform the translation between TSN and 3GPP network, the TSN Translator relies on information and instructions provided by M&O. The M&O entity has wider information about the 3GPP network in terms of devices, their requirements and capabilities, available resources and their utilization, traffic patterns, geo-locations of users and resources, etc.

In addition, according to some embodiments of this invention, there is an active interaction between CNC and M&O (appearing as a CUC from CNC's point of view) in order to make M&O aware of performance capabilities and limits of TSN network part. M&O may exploit this information to establish the appropriate PDU sessions and QoS flows in the 3GPP network. For example, M&O may create 'probing stream requests' based on the expected stream requirements corresponding to the available devices. E.g. sensors used for motion control will have certain stream requirements. In addition, the M&O can create 'probing stream requests' in a way to explore the maximum performance capabilities (delay, throughput) of the TSN network by posing 'higher than needed' requirements on the TSN part of the network. This allows for having less stringent requirements on the 3GPP part of the network. Such trading-off of 3GPP network performance for TSN network performance (or vice versa, e.g., for distributing the available delay budget of an E2E connection) may be decided by M&O entity based on e.g. one or more of E2E requirements of the service, 3GPP network capabilities, and costs of E2E service deployment.

Based on the information on TSN network capabilities, the M&O derives the requirements of the 3GPP counterpart, instructs the TSN Translator on PDU sessions to be established/terminated/adapted in the 3GPP network and according 3GPP QoS values to be translated to TSN parameters (e.g. Bridge Delay) of the 3GPP bridge.

After any change in the network that may affect already signaled parameters of 3GPP bridge, e.g. admission of additional UEs and new end stations, the M&O may request an update of the TSN network topology and provide to TSN Translator corresponding updates with respect to PDU sessions and/or 3GPP QoS values. E.g., it may update the estimated QoS values for 3GPP bridge and/or request a PDU session setup with updated QoS values.

### Initial setup of combined 3GPP-TSN network

The procedure of initial setup of 3GPP-TSN network for the purpose of TSN end station authentication follows the steps described in [6] and [8], respectively. In addition, according to some embodiments of this invention, after a successful authentication of TSN end station by the CUC, the 'acknowledge' message is sent back from CUC to the end station. The M&O intercepts the information about the newly authenticated TSN end station. This may serve as a trigger for M&O to request the network topology from the CNC which may include a request for network discovery. Alternatively, or in addition, M&O may create one or more 'probing stream requests'. After evaluation of the feedback from CNC, M&O may provide corresponding updates of QoS values of 3GPP bridge to the TSN Translator, which will then update the parameters of the Bridge Delay managed object for the 3GPP network.

### Network discovery procedure

The LLDP protocol is executed by the TSN Bridges and the TSN End Stations A and B through which they learn about their direct neighbours. The LLDP protocol is executed in a regular interval so that the actual information about the neighbouring end stations and bridges is available and up to date. The TSN Translator on the TSN network side and the TSN Translator Client on the TSN End Station A side (cf. Figure 3) also support the LLDP protocol and exchange the LLDP parameters (e.g., source and destination MAC address) with their neighbours in the TSN network. Additionally, the TSN Translator provides to TSN Translator Client TSN port information, including the mapping of ports to PDU sessions and QoS flows.

In the general case, the CNC becomes aware of network topology by reading LLDP parameters and Bridge Delay objects from the TSN bridges. The TSN CNC crawls through all the TSN bridges to collect information about the links they are connected to, their capacity, link propagation delay, bridge delay and the devices attached to the ports available to them, from the set of bridge managed objects. As a result, the CNC builds a view on physical topology of the network along with performance metrics and capabilities of the bridges (including the 3GPP bridge) and links. This information is not known to CUC, unless it is explicitly requested by CUC. Such information about network topology and capabilities especially from TSN domain is useful for M&O entity in order to derive the required capabilities (and potential modification of PDU sessions) at 3GPP bridge for supporting E2E service requirements.

This invention therefore discloses two options for extracting such capability and topology information from TSN network and derivation of corresponding requirements of 3GPP network.

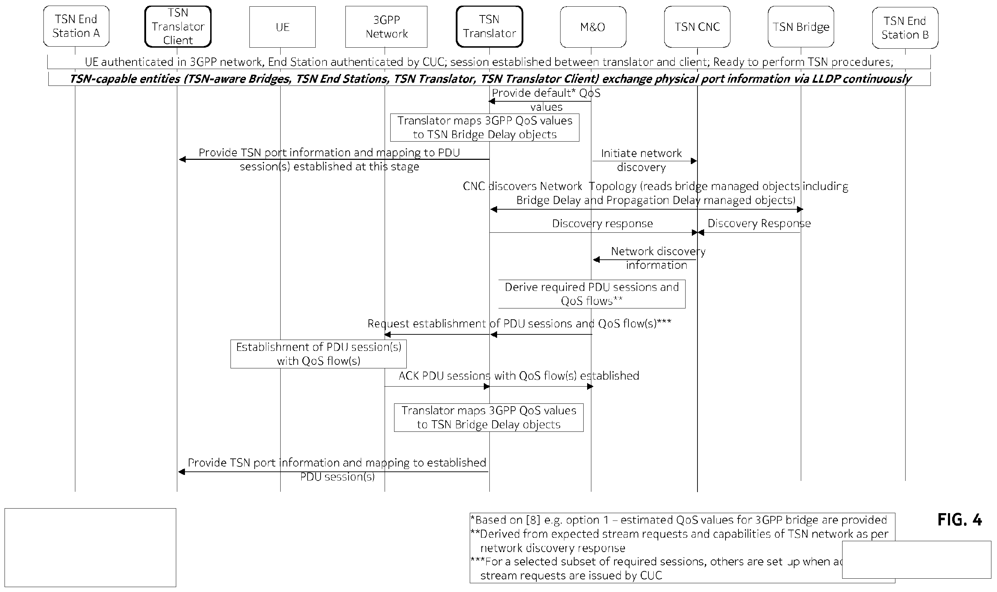

**Option 1 (cf.** **Fig. 4****): The M&O (acting as a CUC) explicitly requests an up-to-date network topology from CNC (e.g. by triggering a network topology discovery to be performed by CNC).** The discovery response is used by M&O to set up required PDU sessions in 3GPP network.

In specific cases (i.e., beyond current TSN specifications in IEEE 802.1Qcc), TSN CUC can trigger a network discovery. In Option 1, the M&O entity acts as a CUC and triggers such a network discovery. While it only gets the default (initial) QoS parameters, based on [8] e.g., Option 1, for the 3GPP network, the TSN CNC returns up-to-date (actual) capacity and delay parameters for the components of the TSN network. Using the (expected) QoS parameters for future e2e communication, the M&O entity may derive the minimum QoS requirements for the 3GPP network. In detail, the M&O may have information about devices (UEs and TSN end stations), such as TSN end station ID, UE IMSI, UE category, allowed PDU session types and the default PDU session type, default 5QI values, SSC (session and service continuity) mode, static IP address/prefix, geolocation, mobility pattern, applications hosted/used by the station, traffic profile (such as probability distribution of traffic volume), mobility profile, etc.). In addition, M&O may use historical information about stream setups. Based on such information, the M&O can estimate the characteristics/QoS parameters of the streams to be requested by end stations in the future. This refers to "expected QoS parameters".

For example, a factory floor can be separated into four areas, each served by a cell using a given frequency band. Further, UE distribution within each of the four areas (cells) as well as the mapping of TSN end stations to such UEs are known. Additionally, TSN network topology (TSN-aware bridges, links between them and ingress/egress points to the TSN network) is available, including respective QoS profiles. The expected traffic (throughput) distribution per TSN end station (received from CUC) can then be used to derive (aggregate) traffic per UE and, further aggregated, on the cell level. This allows for (re-)allocating (dimensioning) the required radio resources per cell ("radio planning") in order to accommodate the expected traffic of TSN end stations. Depending on the required level of reliability and robustness as well as the expected inter-cell mobility, resource overprovisioning in each cell has to be factored in. Additional cells and updated area separation can help to increase overall capacity in the 3GPP system if additional traffic from new TSN applications needs to be accommodated. On the core network side (in particular UPF), expected traffic on available physical ingress and egress ports between TSN and the 3GPP network (UPF) can be estimated and used to configure the mapping of PDU sessions to logical egress and ingress ports of the "3GPP Bridge" and, subsequently, the mapping of logical ports to physical ports. On the aggregated end-to-end level, the spatial and temporal distribution of TSN streams requirements can be used to classify the required 3GPP connectivity requirements (latency, overall throughput, reliability, priority, etc.) into, e.g., five groups and pre-provision a set of PDU sessions that are on standby to serve the most important / most critical streams (e.g., 50% of the most demanding group) even in an ad-hoc manner.

In a second step, depending on the priority and the required reliability of 'promised' QoS parameters and resource guarantees, the M&O may request to establish none, a subset, or all of the calculated PDU sessions (PDU sessions not established now may be established once actual stream requests are issued by TSN CUC), thus also reserving resources for future stream requests. The request to establish some of the calculated PDU sessions (if any) is sent from M&O to the TSN Translator. Upon PDU session establishment the 3GPP network sends response message to TSN Translator with 5QI values of established PDU sessions. TSN Translator maps 3GPP QoS values to Bridge Delay managed object(s). Moreover, it performs mapping between established PDU sessions and TSN port information and shares this information with the TSN Translator Client. In addition, an acknowledgement message is sent to M&O entity.

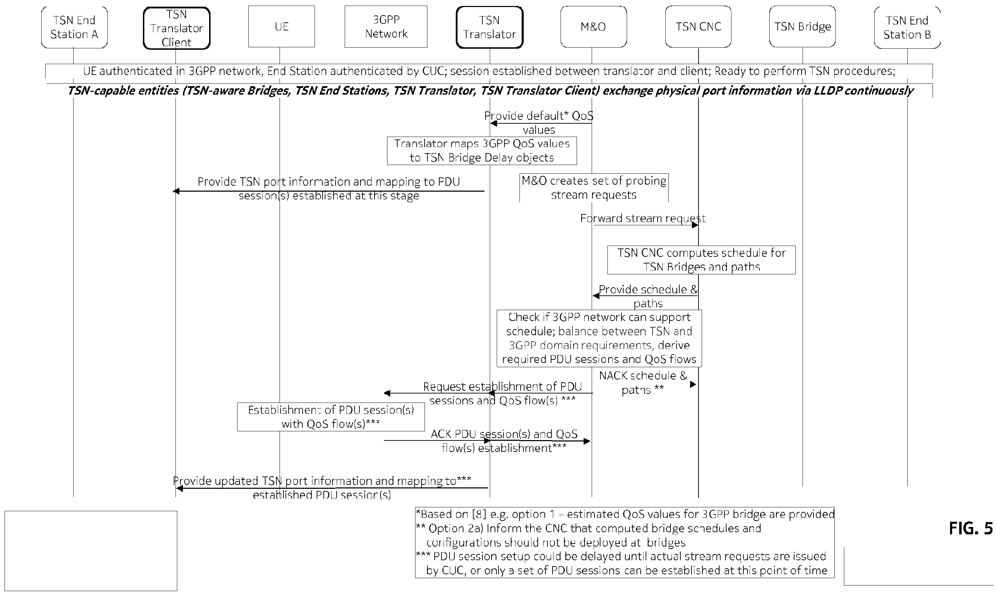

**Option 2a (cf.** **Fig. 5****): M&O, acting as TSN CUC towards TSN CNC, issues a limited number of 'probing stream requests' in order to explore TSN network capabilities and limits and to set up appropriate PDU sessions.**

The M&O may issue one or more probing stream requests for the purpose of discovering the capabilities/performance of the TSN network, preferably for a set of expected QoS classes to be supported (for example maximum of eight QoS classes). Such capabilities (e.g. accumulated latency for the TSN listener end stations) are discovered by the path and schedule computation done by CNC for a given stream [7]. The probing stream requests can correspond, for example, to the (i) most likely stream requests expected to be issued in the future, or (ii) can be created with the purpose to discover the maximal capabilities that can be offered by TSN for a particular stream request. In case (i), the one or more probing request(s) is/are supposed to be a representative for the respective class of expected data flows. They are derived from the information about Talkers and Listeners (and their streams) provided by CUC and/or during the network planning phase. Preferably, the expected data flows are similar to the probing data flows. Similarity comprise a maximum deviation (e.g., 5% or 10%) from both latency and throughput of the probing stream. Thus, the quality indicator(s) obtained from the probing stream have a high significance for the expected data flows.

In order to discover only the TSN capabilities for a particular stream, the M&O can either already account for the feasible 3GPP QoS values in a probing stream request, or it can issue the stream request as if the TSN Translator would be an end station. In the latter case, the schedules and path computation done at CNC refers only to TSN network part.

Knowing such "best" QoS performance capabilities of the TSN network, the M&O may derive more relaxed requirements at the 3GPP network, i.e., 3GPP network performance is traded off for TSN network performance (e.g., re-distributing overall delay budget). This assures higher probability of E2E service requirement fulfillment, since the 3GPP network radio conditions are prone to higher volatility and it is typically harder to achieve the same performance as in wireline TSN network. The M&O can balance between TSN and 3GPP domain requirements by parametrizing the probing stream requests accordingly. M&O provides these relaxed requirements to TSN translator such that TSN translator may provide corresponding delay values to TSN CNC upon next network discovery.

Since the issued request is only a probing stream request, the M&O cancels the computed schedule ('NACK schedule' signaling as foreseen by TSN specifications, regularly issued by CUC) so that the TSN CNC will not execute the TSN bridge settings associated to the schedule. I.e. the CNC will neither configure the forwarding tables for the ports on each bridge of the calculated path nor apply the computed schedule to the TSN network. An alternative for such procedure is described in Option 2b.

**Option 2b: The M&O issues a probing stream request that contains a flag indicating to the TSN CNC that it is a probing stream request.**

This option proposes an update to the TSN protocol. More specifically, the stream request message shall be extended to contain a flag (e.g., an additional bit p) that indicates whether the request is a regular stream request (p = 0) or a probing stream request (p = 1), e.g., for the purpose of exploring TSN network performance. In the latter case, the CNC performs the calculation for a given stream request and provides resulting paths and schedules (which include parameters such as 'accumulated latency' indicating the network capabilities). However, the CNC does not execute the computed schedule. Thus, 'NACK schedule' signaling as described in Option 2a would not be required.

**Option 2c: The M&O issues a probing stream request and refrains from explicit triggering of CNC to execute the calculated schedule**

As a further option, according to [7], the CUC explicitly has to request the CNC (i.e., explicit 'ACK' to CNC) to execute calculated schedules on TSN bridges after the path and schedule calculation. In such implementation approach, neither the flag nor the 'NACK' message is necessary to cancel the actual execution of schedules at TSN bridges done by CNC. The M&O simply does not issue the explicit trigger for deployment of schedules for probing stream requests, but it would merely utilize the received information on TSN network capabilities.

Depending on the implementation, it may be ensured by one of the above described options that CNC does not execute the calculated schedules for the probing stream request.

### Establishment of end to end communication

For establishment of a communication between one (or multiple) TSN talkers and one (or multiple) TSN listeners, the TSN CUC reads the QoS parameters and stream requirements from the TSN End Stations A and B. In the usual TSN procedure, this information and the information about the TSN End Stations A and B (e.g. MAC addresses) to be connected are then provided to the TSN CNC. As described in [8] and hereinabove, the M&O entity can intercept the Stream Request message in order to check whether existing (i.e., already established) PDU sessions can fulfil the requirements or if new/modified PDU session need to be set up.

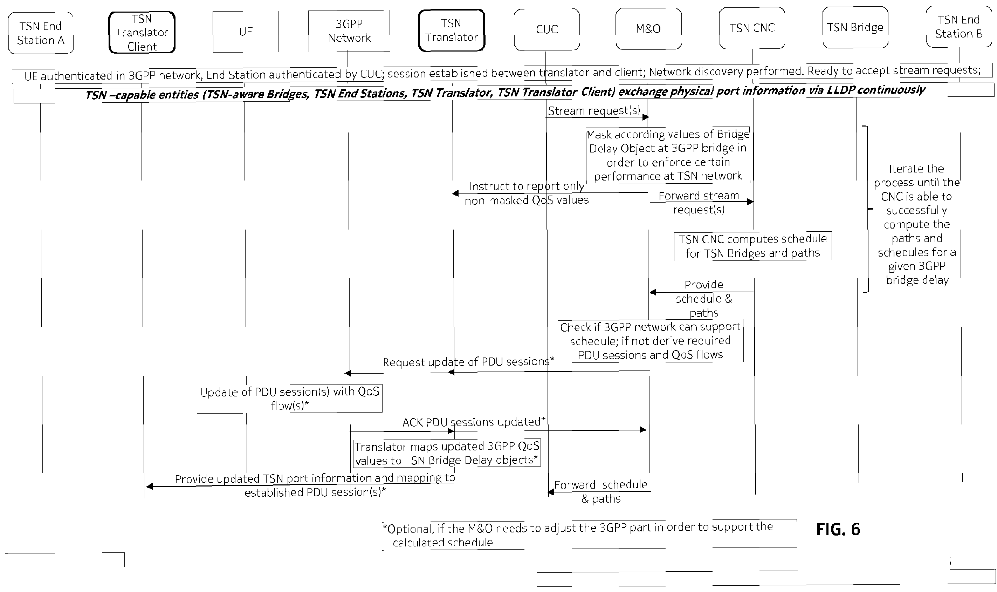

Additionally, in some embodiments of this invention, in order to enforce the utilization of certain TSN network capabilities upon the actual Stream Request is issued, certain (i.e., usually better) values for 3GPP Bridge delay will be masked by M&O. That is, M&O instructs TSN translator to report worse quality than necessary.. Hence only worse values will be reported to CNC by TSN Translator. By such masking and thus selecting the desired delay values for 3GPP bridge for a given actual stream request, the M&O will enforce a path and schedule calculation at CNC that implements more stringent requirements on TSN network side and more relaxed requirements at 3GPP network side, as depicted in Fig. 6. E.g., for an E2E stream request with 4ms delay requirement the M&O can enforce the situation in which the TSN domain provides the path with 1ms delay whereas the 3GPP domain has more relaxed 3ms delay budget. As M&O already knows that this setup can be supported by both domains (based on corresponding TSN probing stream requests issued during network discovery), it will mask all 3GPP bridge delay values lower than target 3ms delay in order to enforce the utilization of discovered TSN capabilities for actual stream requests. If for any reason the CNC is not able to compute the paths and schedules for a given 3GPP bridge delay values, the M&O will adapt the masking and thus relax the requirements on TSN network at the cost of higher requirements at 3GPP network.

Once the TSN CNC successfully computes the scheduling related parameters for the TSN Bridges and the End Stations, the result is provided to the TSN CUC. However, the M&O entity intercepts the result of the CNC calculation and again checks whether or not changes are needed in the PDU sessions of the 3GPP network (as shown in Figure 6). E.g., the M&O will accordingly instruct the TSN Translator to trigger the 3GPP network to update/set up PDU session(s), QoS flow(s), and/or update QoS flow parameters respectively (TSN Translator also updates Bridge Delay managed objects accordingly). Only after potential changes are acknowledged from 3GPP network and TSN Translator, respectively, the schedule is forwarded to TSN CUC. The TSN CUC configures the TSN End Stations A and B with the computed scheduling related parameters and finally initiates the start of the message transfer at the End Station A at a specified time.

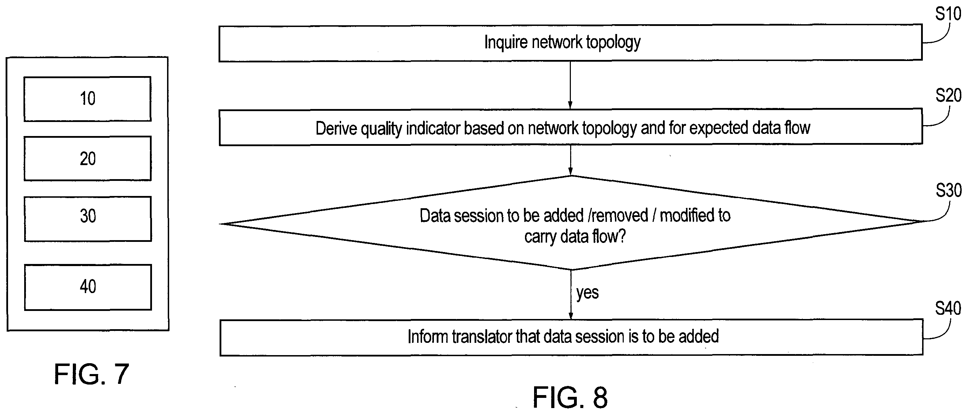

Fig. 7 shows an apparatus according to an embodiment of the invention. The apparatus may be a M&O entity or an element thereof. Fig. 8 shows a method according to an embodiment of the invention. The apparatus according to Fig. 7 may perform the method of Fig. 8 but is not limited to this method. The method of Fig. 8 may be performed by the apparatus of Fig. 7 but is not limited to being performed by this apparatus.

The apparatus comprises means for inquiring 10, means for deriving 20, means for deciding 30, and means for informing 40. The means for inquiring 10, means for deriving 20, means for deciding 30, and means for informing 40 may be an inquiring means, deriving means, deciding means, and informing means, respectively. The means for inquiring 10, means for deriving 20, means for deciding 30, and means for informing 40 may be an inquirer, deriver, decider, and informer respectively. The means for inquiring 10, means for deriving 20, means for deciding 30, and means for informing 40 may be an inquiring processor, deriving processor, deciding processor, and informing processor, respectively.

The means for inquiring 10 inquires a network topology of a wireline network from a controller of the wireline network (S10). The network topology comprises topological information and information on a respective quality of service capability. For example, the wireline network may be a TSN network, and the controller may be a CNC.

Based on the network topology received in response to the inquiring and an expected flow request for a data flow from the wireline network through a wireless network, the means for deriving 20 derives a quality indicator of the data flow in the wireless network (S20). According to configuration data stored in the apparatus, the translator encapsulates the wireless network towards the wireline network. For example, the wireless network may be a 3GPP network.

The means for deciding 30 decides, based on the derived quality indicator, if a data session in the wireless network has to be added, removed, or modified in order to carry the data flow (S30). For example, a data session may be a PDU session.

If the data session in the wireless network has to be added, removed, or modified in order to carry the data flow (S30 = "yes"), the means for informing 40 informs the translator that the data session in the wireless network has to be added, removed, or modified (S40).

Fig. 9 shows an apparatus according to an embodiment of the invention. The apparatus may be a M&O entity or an element thereof. Fig. 10 shows a method according to an embodiment of the invention. The apparatus according to Fig. 9 may perform the method of Fig. 10 but is not limited to this method. The method of Fig. 10 may be performed by the apparatus of Fig. 9 but is not limited to being performed by this apparatus.

The apparatus comprises means for creating 110, means for inquiring 120, means for deriving 130, means for deciding 140, and means for informing 150. The means for creating 110, means for inquiring 120, means for deriving 130, means for deciding 140, and means for informing 150 may be a creating means, inquiring means, deriving means, deciding means, and informing means, respectively. The means for creating 110, means for inquiring 120, means for deriving 130, means for deciding 140, and means for informing 150 may be a creator, inquirer, deriver, decider, and informer respectively. The means for creating 110, means for inquiring 120, means for deriving 130, means for deciding 140, and means for informing 150 may be a creating processor, inquiring processor, deriving processor, deciding processor, and informing processor, respectively.

The means for creating 110 creates a flow request for a probing data flow through a wireline network and a wireless network (S110). According to configuration data stored in the apparatus, the wireless network is encapsulated towards the wireline network by a translator. For example, the wireline network may be a TSN network, and the wireless network may be a 3GPP network.

The means for inquiring 120 inquires from a controller of the wireline network a schedule for the probing data flow (S120). For example, the controller may be a TSN CNC.

Based on the schedule received in response to the inquiring in S120, the means for deriving 130 derives a quality parameter of a first data session to carry an expected data flow in the wireless network (S130). The first data session may be a PDU session.

The means for deciding 140 decides, based on the derived quality indicator, if a second data session in the wireless network has to be added, removed, or modified in order to carry an expected data flow. The second data session may be a PDU session. The second data session may be the same as the first data session, or may be different therefrom.

If the second data session in the wireless network has to be added, removed, or modified in order to carry the expected data flow (S140 = "yes"), the means for informing 150 informs the translator that the second data session in the wireless network has to be added, removed, or modified (S150).

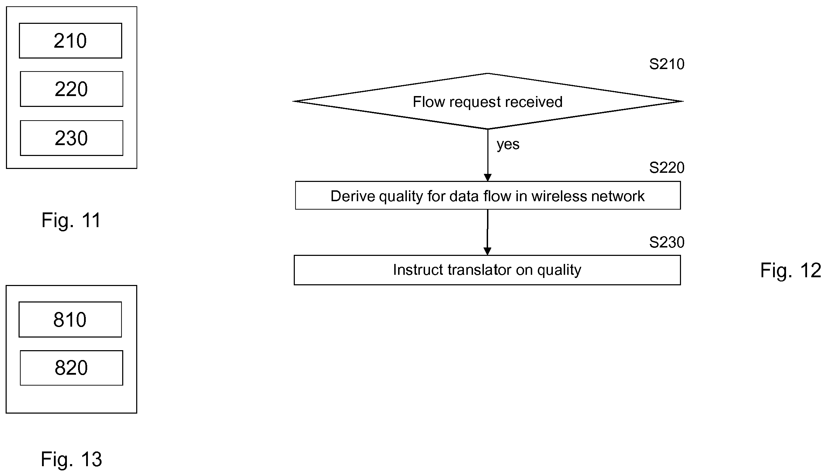

Fig. 11 shows an apparatus according to an embodiment of the invention. The apparatus may be a M&O entity or an element thereof. Fig. 12 shows a method according to an embodiment of the invention. The apparatus according to Fig. 11 may perform the method of Fig. 12 but is not limited to this method. The method of Fig. 12 may be performed by the apparatus of Fig. 11 but is not limited to being performed by this apparatus.

The apparatus comprises means for monitoring 210, means for deriving 220, and means for instructing 230. The means for monitoring 210, means for deriving 220, and means for instructing 230 may be an monitoring means, deriving means, and instructing means, respectively. The means for monitoring 210, means for deriving 220, and means for instructing 230 may be a monitor, deriver, and instructor, respectively. The means for monitoring 210, means for deriving 220, and means for instructing 230 may be a monitoring processor, deriving processor, and instructing processor, respectively.

The means for monitoring 210 monitors if a flow request for a data flow through a wireline network and a wireless network is received (S210). According to configuration data stored in the apparatus, the wireless network is encapsulated towards the wireline network by a translator. For example, the wireline network may be a TSN network, and the wireless network may be a 3GPP network.

If the flow request is received (S210 = "yes"), the means for deriving 220 derives a quality the wireless network may provide to the data flow (S220). The quality is derived based on a configuration of the wireless network and a policy on the quality.

The means for instructing 230 instructs the translator to report the derived quality in response to a request to report the quality (S230).

Fig. 13 shows an apparatus according to an embodiment of the invention. The apparatus comprises at least one processor 810, at least one memory 820 including computer program code, and the at least one processor 810, with the at least one memory 820 and the computer program code, being arranged to cause the apparatus to at least perform the method according to one of Figs. 8, 10, and 12.

Some embodiments of the invention are described with respect to a 3GPP network. However, the invention is not limited to 3GPP networks. It may be applied to other wireless networks such as a WiFi network, too.

Some embodiments of the invention are described with respect to an industrial TSN network. However, the invention is not limited to industrial TSN networks. It may be applied to other (non-industrial) TSN networks such as Profinet and to other fixed line networks, too.

Fig. 2 shows an example where one of the TSN bridges is replaced by a 3GPP network embedded between TSN translator and TSN translator client. In some embodiments of the invention, one or more or even all bridges of the TSN network may be replaced by respective 3GPP networks embedded between respective TSN translator and TSN client. In case of plural replaced bridges, some or all of the respective 3GPP networks may be the same (i.e. one 3GPP network), wherein different replaced TSN bridges correspond to different sets of PDU sessions in the 3GPP network (i.e., a single TSN bridge corresponds to one set of PDU sessions, wherein each set may comprise one or more PDU sessions). In addition, the respective UE may be the same or different for different replaced TSN bridges.

In general, a bridge may comprise one or more TSN translators (corresponding to multiple sets of SMF, PCF and UPF), the core network and the radio access network and one or more UEs (terminal) of the wireless network (3GPP network), and one or more TSN translator clients. Each TSN translator client is related to one of the UEs. One UE may be related to one or more TSN translator clients. The TSN translator clients correspond to ports of a conventional bridge.

Embodiments of the invention are described based on the fully centralized configuration model in TSN networks which assumes existence of CUC and CNC [2]. The reason for such approach is that the centralized configuration model is regarded as the most efficient one for achieving the stringent timing requirements of industrial networks.

However, embodiments of this invention report may be applicable to other configuration models of TSN network. Namely:
- In fully distributed model: the end stations communicate the stream requirement directly to the adjacent bridge over the TSN user/network protocol. According to such embodiments of the invention, the TSN Translator Client at the UE side may recognize and forward such requirements to the TSN Translator. The TSN Translator, having the interface to the M&O, can communicate the end station requirements to the M&O. The M&O configures the 3GPP bridge as described above by setting up according PDU sessions. Such configured 3GPP bridge acts further as a "regular" TSN bridge as defined by TSN fully distributed model (e.g. supporting propagation of schedule configuration information between Talkers/Listeners and bridges using TSN Translator and TSN Translator Client).
- In centralized network/distributed user model: The M&O becomes aware of end user stream requirements in a similar way, i.e. the TSN Translator Client at the UE side communicates the issued stream requirements to the TSN Translator which signals them to the M&O. The M&O sets up the required PDU sessions of the 3GPP bridge which further acts as a "regular" TSN bridge according to the procedures defined in centralized model. E.g. the 3GPP bridge receives and executes the schedule configuration information as computed by CNC using TSN Translator. The TSN Translator and the TSN Translator Client are used for exchange of configuration information between Talkers/Listeners at UE side and 3GPP bridge.

Embodiments are described hereinabove wherein M&O provides the information about the (estimated/requested) QoS directly to the TSN translator. However, in some embodiments, M&O may provide this information to CNC which forwards it to the TSN translator. Thus, an interface between M&O and TSN translator may not be needed but an additional message exchange is required.

One piece of information may be transmitted in one or plural messages from one entity to another entity. Each of these messages may comprise further (different) pieces of information.

Names of network elements, protocols, and methods are based on current standards. In other versions or other technologies, the names of these network elements and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

According to the above description, it should thus be apparent that example embodiments of the present invention provide, for example, a translator, or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a M&O, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Apparatus, comprising
means for inquiring (10) configured to inquire a network topology of a wireline network from a controller of the wireline network, wherein the network topology comprises topological information and information on a quality of service capability of the wireline network in terms of guaranteed delays and throughput, and wherein the wireline network comprises one or more bridges;
means for deriving (20) configured to derive, based on an expected flow request for a data flow from the wireline network through a wireless network, based on an end-to-end service requirement for the data flow, and based on the network topology received in response to the inquiring for the network topology, a quality indicator of the data flow in the wireless network;
means for deciding (30) configured to decide if a data session in the wireless network has to be added in order to carry the data flow, based on the derived quality indicator;
means for informing (40) configured to inform a translator that the data session in the wireless network has to be added if the data session in the wireless network has to be added in order to carry the data flow, wherein, according to configuration data stored in the apparatus, the translator encapsulates the wireless network towards the wireline network such that the translator and the wireless network act as one of the one or more bridges of the wireline network, wherein
the wireline network is a TSN network;
each of the bridges of the wireline network is a respective TSN bridge;
the wireless network is a 3GPP network.

2. The apparatus according to claim 1, further comprising
means for monitoring configured to monitor if the wireless network has changed in such a way that a parameter of the wireless network having been signaled to the controller of the wireline network may be affected; wherein
the means for inquiring is configured to inquire the network topology from the controller if the wireless network has changed in such a way that the parameter of the wireless network having been signaled to the controller of the wireline network may be affected.

3. The apparatus according to any of claims 1 and 2, wherein the inquiring comprises instructing the controller to perform a network topology discovery procedure in order to obtain the network topology.

4. Apparatus, comprising
means for creating (110) configured to create a flow request to a controller of a wireline network for a first data flow through the wireline network and a wireless network, wherein, the wireline network comprises one or more bridges, and, according to configuration data stored in the apparatus, the wireless network is encapsulated towards the wireline network by a translator such that the translator and the wireless network act as one of the one or more bridges of the wireline network;
means for inquiring (120) configured to inquire from the controller of the wireline network a schedule for the first data flow;
means for deriving (130) configured to derive, based on the schedule received in response to the inquiring for the schedule, a quality indicator of a first data session to carry the expected data flow in the wireless network;
means for deciding (140) configured to decide if a second data session in the wireless network has to be added in order to carry the expected data flow, based on the derived quality indicator;
means for informing (150) configured to inform the translator that the second data session in the wireless network has to be added if the second data session in the wireless network has to be added in order to carry the expected data flow, wherein
the wireline network is a TSN network;
each of the bridges of the wireline network is a respective TSN bridge;
the wireless network is a 3GPP network.

5. The apparatus according to claim 4, further comprising one of
means for prohibiting configured to prohibit requesting the controller to set up the first data flow after the apparatus has received the schedule; and
means for denying configured to deny towards the controller that the first data flow may be set up after the apparatus has received the schedule.

6. The apparatus according to any of claims 4 and 5, wherein
the means for inquiring is configured to indicate towards the controller that the first data flow must not be set up.

7. The apparatus according to any of claims 4 to 6, wherein
the means for deriving is configured to derive the quality indicator such that it indicates a lower quality than a maximum quality the wireless network can provide to carry the expected data flow.

8. The apparatus according to claim 7, wherein
the means for deriving is configured to derive the lower quality which is a minimized quality under a condition that the wireless network is capable to carry the expected data flow.

9. Apparatus, comprising
means for monitoring (210) configured to monitor if a flow request for a data flow through a wireline network and a wireless network is received, wherein, the wireline network comprises one or more bridges, and, according to configuration data stored in the apparatus, the wireless network is encapsulated towards the wireline network by a translator such that the translator and the wireless network act as one of the one or more bridges of the wireline network;
means for deriving (220) configured to derive a quality the wireless network may provide to the data flow based on a quality in terms of guaranteed delays and throughput the wireline network may provide to the data flow, a configuration of the wireless network, an end-to-end service requirement for the data flow, and a policy on the quality the wireless network may provide to the data flow if the flow request is received; means for instructing (230) configured to instruct the translator to report the derived quality in response to a request to report the quality, wherein
the wireline network is a TSN network;
each of the bridges of the wireline network is a respective TSN bridge;
the wireless network is a 3GPP network.

10. The apparatus according to claim 9, wherein the policy comprises that the derived quality is lower than a maximum quality the wireless network may provide based on the configuration of the wireless network if the derived quality fits to a quality requirement according to the flow request.

11. Method, comprising
inquiring (S10) a network topology of a wireline network from a controller of the wireline network, wherein the network topology comprises topological information and information on a quality of service capability of the wireline network, and the wireline network comprises one or more bridges;
deriving (S20), based on the network topology received in response to the inquiring, based on an end-to-end service requirement for the data flow, and based on an expected flow request for a data flow from the wireline network through a wireless network, a quality indicator of the data flow in the wireless network;
deciding (S30) if a data session in the wireless network has to be added in order to carry the data flow, based on the derived quality indicator;
informing (S40) a translator that the data session in the wireless network has to be added if the data session in the wireless network has to be added in order to carry the data flow, wherein, according to stored configuration data, the translator encapsulates the wireless network towards the wireline network such that the translator and the wireless network act as one of the one or more bridges of the wireline network, wherein
the wireline network is a TSN network;
each of the bridges of the wireline network is a respective TSN bridge;
the wireless network is a 3GPP network.

12. Method, comprising
creating (S110) a flow request to a controller of a wireline network for a first data flow through the wireline network and a wireless network, wherein the wireline network comprises one or more bridges, and, according to stored configuration data, the wireless network is encapsulated towards the wireline network by a translator such that the translator and the wireless network act as one of the one or more bridges of the wireline network;
inquiring (S120) from the controller of the wireline network a schedule for the first data flow;
deriving (S130), based on the schedule received in response to the inquiring, a quality indicator of a first data session to carry an expected data flow in the wireless network;
deciding (S140) if a second data session in the wireless network has to be added in order to carry the expected data flow, based on the derived quality indicator;
informing (S150) the translator that the second data session in the wireless network has to be added if the second data session in the wireless network has to be added in order to carry the expected data flow, wherein
the wireline network is a TSN network;
each of the bridges of the wireline network is a respective TSN bridge;
the wireless network is a 3GPP network.

13. Method, comprising
monitoring (S210) if a flow request for a data flow through a wireline network and a wireless network is received, wherein, the wireline network comprises one or more bridges, and, according to stored configuration data, the wireless network is encapsulated towards the wireline network by a translator such that the translator and the wireless network act as one of the one or more bridges of the wireline network;
deriving (S220) a quality the wireless network may provide to the data flow based on a quality in terms of guaranteed delays and throughput the wireline network may provide to the data flow, based on a configuration of the wireless network, based on an end-to-end service requirement for the data flow, and based on a policy on the quality the wireless network may provide to the data flow if the flow request is received;
instructing (S230) the translator to report the derived quality in response to a request to report the quality, wherein
the wireline network is a TSN network;
each of the bridges of the wireline network is a respective TSN bridge;
the wireless network is a 3GPP network.

14. A computer program product comprising a set of instructions which, when executed on an apparatus, is configured to cause the apparatus to carry out the method according to any of claims 11 to 13.

## Patentansprüche

1. Vorrichtung, umfassend
Mittel zum Abfragen (10), die konfiguriert sind, um eine Netztopologie eines drahtgebundenen Netzes von einer Steuerung des drahtgebundenen Netzes abzufragen, wobei die Netztopologie topologische Informationen und Informationen über eine Dienstgütefähigkeit des drahtgebundenen Netzes in Bezug auf garantierte Verzögerungen und Durchsatz umfasst, und wobei das drahtgebundene Netz eine oder mehrere Brücken umfasst;
Mittel zum Ableiten (20), die konfiguriert sind, um basierend auf einer erwarteten Flussanforderung für einen Datenfluss aus dem drahtgebundenen Netz durch ein drahtloses Netz, basierend auf einer Ende-zu-Ende-Dienstanforderung für den Datenfluss, und basierend auf der als Antwort auf das Abfragen der Netztopologie empfangenen Netztopologie, einen Qualitätsindikator des Datenflusses in dem drahtlosen Netz abzuleiten;
Mittel zum Entscheiden (30), die konfiguriert sind, um zu entscheiden, ob eine Datensitzung in dem drahtlosen Netz hinzugefügt werden muss, um den Datenfluss zu übertragen, basierend auf dem abgeleiteten Qualitätsindikator;
Mittel zum Informieren (40), die konfiguriert sind, um einen Übersetzer zu informieren, dass die Datensitzung in dem drahtlosen Netz hinzugefügt werden muss, wenn die Datensitzung in dem drahtlosen Netz hinzugefügt werden muss, um den Datenfluss zu übertragen, wobei, gemäß in der Vorrichtung gespeicherten Konfigurationsdaten, der Übersetzer das drahtlose Netz gegenüber dem drahtgebundenen Netz derart kapselt, dass der Übersetzer und das drahtlose Netz als eine der einen oder mehreren Brücken des drahtgebundenen Netzes fungieren, wobei
das drahtgebundene Netz ein TSN-Netz ist;
jede der Brücken des drahtgebundenen Netzes eine jeweilige TSN-Brücke ist;
das drahtlose Netz ein 3GPP-Netz ist.

2. Vorrichtung nach Anspruch 1, ferner umfassend
Mittel zum Überwachen, die konfiguriert sind, um zu überwachen, ob sich das drahtlose Netz in einer Weise geändert hat, dass ein Parameter des drahtlosen Netzes, der an die Steuerung des drahtgebundenen Netzes signalisiert wurde, betroffen sein kann; wobei
die Mittel zum Abfragen konfiguriert sind, um die Netztopologie von der Steuerung abzufragen, wenn sich das drahtlose Netz in einer Weise geändert hat, dass der Parameter des drahtlosen Netzes, der an die Steuerung des drahtgebundenen Netzes signalisiert wurde, betroffen sein kann.

3. Vorrichtung nach einem der Ansprüche 1 und 2, wobei das Abfragen das Anweisen der Steuerung umfasst, ein Netztopologie-Erkennungsverfahren durchzuführen, um die Netztopologie zu erhalten.

4. Vorrichtung, umfassend
Mittel zum Erstellen (110), die konfiguriert sind, um eine Flussanforderung an eine Steuerung eines drahtgebundenen Netzes für einen ersten Datenfluss durch das drahtgebundene Netz und ein drahtloses Netz zu erstellen, wobei das drahtgebundene Netz eine oder mehrere Brücken umfasst, und, gemäß in der Vorrichtung gespeicherten Konfigurationsdaten, das drahtlose Netz gegenüber dem drahtgebundenen Netz durch einen Übersetzer derart gekapselt ist, dass der Übersetzer und das drahtlose Netz als eine der einen oder mehreren Brücken des drahtgebundenen Netzes fungieren;
Mittel zum Abfragen (120), die konfiguriert sind, um von der Steuerung des drahtgebundenen Netzes einen Zeitplan für den ersten Datenfluss abzufragen;
Mittel zum Ableiten (130), die konfiguriert sind, um basierend auf dem als Antwort auf das Abfragen des Zeitplans empfangenen Zeitplan einen Qualitätsindikator einer ersten Datensitzung zum Übertragen eines erwarteten Datenflusses in dem drahtlosen Netz abzuleiten;
Mittel zum Entscheiden (140), die konfiguriert sind, um zu entscheiden, ob eine zweite Datensitzung in dem drahtlosen Netz hinzugefügt werden muss, um den erwarteten Datenfluss zu übertragen, basierend auf dem abgeleiteten Qualitätsindikator;
Mittel zum Informieren (150), die konfiguriert sind, um den Übersetzer zu informieren, dass die zweite Datensitzung in dem drahtlosen Netz hinzugefügt werden muss, wenn die zweite Datensitzung in dem drahtlosen Netz hinzugefügt werden muss, um den erwarteten Datenfluss zu übertragen, wobei
das drahtgebundene Netz ein TSN-Netz ist;
jede der Brücken des drahtgebundenen Netzes eine jeweilige TSN-Brücke ist;
das drahtlose Netz ein 3GPP-Netz ist.

5. Vorrichtung nach Anspruch 4, ferner umfassend eines von Mitteln zum Verbieten, die konfiguriert sind, um zu verbieten, die Steuerung aufzufordern, den ersten Datenfluss einzurichten, nachdem die Vorrichtung den Zeitplan empfangen hat; und
Mitteln zum Verweigern, die konfiguriert sind, um gegenüber der Steuerung zu verweigern, dass der erste Datenfluss eingerichtet werden darf, nachdem die Vorrichtung den Zeitplan empfangen hat.

6. Vorrichtung nach einem der Ansprüche 4 und 5, wobei
die Mittel zum Abfragen konfiguriert sind, um gegenüber der Steuerung anzuzeigen, dass der erste Datenfluss nicht eingerichtet werden darf.

7. Vorrichtung nach einem der Ansprüche 4 bis 6, wobei
die Mittel zum Ableiten konfiguriert sind, um den Qualitätsindikator derart abzuleiten, dass er eine niedrigere Qualität anzeigt als eine maximale Qualität, die das drahtlose Netz zum Übertragen des erwarteten Datenflusses bereitstellen kann.

8. Vorrichtung nach Anspruch 7, wobei
die Mittel zum Ableiten konfiguriert sind, um die niedrigere Qualität abzuleiten, die eine minimierte Qualität unter der Bedingung ist, dass das drahtlose Netz in der Lage ist, den erwarteten Datenfluss zu übertragen.

9. Vorrichtung, umfassend
Mittel zum Überwachen (210), die konfiguriert sind, um zu überwachen, ob eine Flussanforderung für einen Datenfluss durch ein drahtgebundenes Netz und ein drahtloses Netz empfangen wird, wobei das drahtgebundene Netz eine oder mehrere Brücken umfasst, und, gemäß in der Vorrichtung gespeicherten Konfigurationsdaten, das drahtlose Netz gegenüber dem drahtgebundenen Netz durch einen Übersetzer derart gekapselt ist, dass der Übersetzer und das drahtlose Netz als eine der einen oder mehreren Brücken des drahtgebundenen Netzes fungieren;
Mittel zum Ableiten (220), die konfiguriert sind, um eine Qualität abzuleiten, die das drahtlose Netz dem Datenfluss basierend auf einer Qualität in Bezug auf garantierte Verzögerungen und Durchsatz, die das drahtgebundene Netz dem Datenfluss bereitstellen kann, basierend auf einer Konfiguration des drahtlosen Netzes, basierend auf einer Ende-zu-Ende-Dienstanforderung für den Datenfluss, und basierend auf einer Richtlinie über die Qualität, die das drahtlose Netz dem Datenfluss bereitstellen kann, wenn die Flussanforderung empfangen wird, bereitstellen kann;
Mittel zum Anweisen (230), die konfiguriert sind, um den Übersetzer anzuweisen, die abgeleitete Qualität als Antwort auf eine Anforderung zur Meldung der Qualität zu melden, wobei
das drahtgebundene Netz ein TSN-Netz ist;
jede der Brücken des drahtgebundenen Netzes eine jeweilige TSN-Brücke ist;
das drahtlose Netz ein 3GPP-Netz ist.

10. Vorrichtung nach Anspruch 9, wobei die Richtlinie umfasst, dass die abgeleitete Qualität niedriger ist als eine maximale Qualität, die das drahtlose Netz basierend auf der Konfiguration des drahtlosen Netzes bereitstellen kann, wenn die abgeleitete Qualität einer Qualitätsanforderung gemäß der Flussanforderung entspricht.

11. Verfahren, umfassend
Abfragen (S10) einer Netztopologie eines drahtgebundenen Netzes von einer Steuerung des drahtgebundenen Netzes, wobei die Netztopologie topologische Informationen und Informationen über eine Dienstgütefähigkeit des drahtgebundenen Netzes umfasst, und das drahtgebundene Netz eine oder mehrere Brücken umfasst;
Ableiten (S20), basierend auf der als Antwort auf das Abfragen empfangenen Netztopologie, basierend auf einer Ende-zu-Ende-Dienstanforderung für den Datenfluss, und basierend auf einer erwarteten Flussanforderung für einen Datenfluss aus dem drahtgebundenen Netz durch ein drahtloses Netz, eines Qualitätsindikators des Datenflusses in dem drahtlosen Netz;
Entscheiden (S30), ob eine Datensitzung in dem drahtlosen Netz hinzugefügt werden muss, um den Datenfluss zu übertragen, basierend auf dem abgeleiteten Qualitätsindikator;
Informieren (S40) eines Übersetzers, dass die Datensitzung in dem drahtlosen Netz hinzugefügt werden muss, wenn die Datensitzung in dem drahtlosen Netz hinzugefügt werden muss, um den Datenfluss zu übertragen, wobei, gemäß gespeicherten Konfigurationsdaten, der Übersetzer das drahtlose Netz gegenüber dem drahtgebundenen Netz derart kapselt, dass der Übersetzer und das drahtlose Netz als eine der einen oder mehreren Brücken des drahtgebundenen Netzes fungieren, wobei
das drahtgebundene Netz ein TSN-Netz ist;
jede der Brücken des drahtgebundenen Netzes eine jeweilige TSN-Brücke ist;
das drahtlose Netz ein 3GPP-Netz ist.

12. Verfahren, umfassend
Erstellen (S110) einer Flussanforderung an eine Steuerung eines drahtgebundenen Netzes für einen ersten Datenfluss durch das drahtgebundene Netz und ein drahtloses Netz, wobei das drahtgebundene Netz eine oder mehrere Brücken umfasst, und, gemäß gespeicherten Konfigurationsdaten, das drahtlose Netz gegenüber dem drahtgebundenen Netz durch einen Übersetzer derart gekapselt ist, dass der Übersetzer und das drahtlose Netz als eine der einen oder mehreren Brücken des drahtgebundenen Netzes fungieren;
Abfragen (S120) von der Steuerung des drahtgebundenen Netzes eines Zeitplans für den ersten Datenfluss;
Ableiten (S130), basierend auf dem als Antwort auf das Abfragen empfangenen Zeitplan, eines Qualitätsindikators einer ersten Datensitzung zum Übertragen eines erwarteten Datenflusses in dem drahtlosen Netz;
Entscheiden (S140), ob eine zweite Datensitzung in dem drahtlosen Netz hinzugefügt werden muss, um den erwarteten Datenfluss zu übertragen, basierend auf dem abgeleiteten Qualitätsindikator;
Informieren (S150) des Übersetzers, dass die zweite Datensitzung in dem drahtlosen Netz hinzugefügt werden muss, wenn die zweite Datensitzung in dem drahtlosen Netz hinzugefügt werden muss, um den erwarteten Datenfluss zu übertragen, wobei
das drahtgebundene Netz ein TSN-Netz ist;
jede der Brücken des drahtgebundenen Netzes eine jeweilige TSN-Brücke ist;
das drahtlose Netz ein 3GPP-Netz ist.

13. Verfahren, umfassend
Überwachen (S210), ob eine Flussanforderung für einen Datenfluss durch ein drahtgebundenes Netz und ein drahtloses Netz empfangen wird, wobei das drahtgebundene Netz eine oder mehrere Brücken umfasst, und, gemäß gespeicherten Konfigurationsdaten, das drahtlose Netz gegenüber dem drahtgebundenen Netz durch einen Übersetzer derart gekapselt ist, dass der Übersetzer und das drahtlose Netz als eine der einen oder mehreren Brücken des drahtgebundenen Netzes fungieren;
Ableiten (S220) einer Qualität, die das drahtlose Netz dem Datenfluss basierend auf einer Qualität in Bezug auf garantierte Verzögerungen und Durchsatz, die das drahtgebundene Netz dem Datenfluss bereitstellen kann, basierend auf einer Konfiguration des drahtlosen Netzes, basierend auf einer Ende-zu-Ende-Dienstanforderung für den Datenfluss, und basierend auf einer Richtlinie über die Qualität, die das drahtlose Netz dem Datenfluss bereitstellen kann, wenn die Flussanforderung empfangen wird, bereitstellen kann;
Anweisen (S230) des Übersetzers, die abgeleitete Qualität als Antwort auf eine Anforderung zur Meldung der Qualität zu melden, wobei
das drahtgebundene Netz ein TSN-Netz ist;
jede der Brücken des drahtgebundenen Netzes eine jeweilige TSN-Brücke ist;
das drahtlose Netz ein 3GPP-Netz ist.

14. Computerprogrammprodukt, umfassend einen Satz von Anweisungen, die, wenn sie auf einer Vorrichtung ausgeführt werden, konfiguriert sind, um zu veranlassen, dass die Vorrichtung das Verfahren nach einem der Ansprüche 11 bis 13 ausführt.

## Revendications

1. Appareil, comprenant
un moyen d'interrogation (10) configuré pour interroger une topologie de réseau d'un réseau filaire à partir d'un contrôleur du réseau filaire, dans lequel la topologie de réseau comprend des informations topologiques et des informations sur une capacité de qualité de service du réseau filaire en termes de retards garantis et de débit, et dans lequel le réseau filaire comprend un ou plusieurs ponts ;
un moyen de dérivation (20) configuré pour dériver, sur la base d'une demande de flux attendue pour un flux de données provenant du réseau filaire à travers un réseau sans fil, sur la base d'une exigence de service de bout en bout pour le flux de données, et sur la base de la topologie de réseau reçue en réponse à l'interrogation de la topologie de réseau, un indicateur de qualité du flux de données dans le réseau sans fil ;
un moyen de décision (30) configuré pour décider si une session de données dans le réseau sans fil doit être ajoutée afin de transporter le flux de données, sur la base de l'indicateur de qualité dérivé ;
un moyen d'information (40) configuré pour informer un traducteur que la session de données dans le réseau sans fil doit être ajoutée si la session de données dans le réseau sans fil doit être ajoutée afin de transporter le flux de données, dans lequel, selon des données de configuration stockées dans l'appareil, le traducteur encapsule le réseau sans fil vers le réseau filaire de sorte que le traducteur et le réseau sans fil agissent comme l'un des un ou plusieurs ponts du réseau filaire, dans lequel
le réseau filaire est un réseau TSN ;
chacun des ponts du réseau filaire est un pont TSN respectif ;
le réseau sans fil est un réseau 3GPP.

2. Appareil selon la revendication 1, comprenant en outre un moyen de surveillance configuré pour surveiller si le réseau sans fil a changé de manière telle qu'un paramètre du réseau sans fil ayant été signalé au contrôleur du réseau filaire peut être affecté ; dans lequel
le moyen d'interrogation est configuré pour interroger la topologie de réseau auprès du contrôleur si le réseau sans fil a changé de manière telle que le paramètre du réseau sans fil ayant été signalé au contrôleur du réseau filaire peut être affecté.

3. Appareil selon l'une quelconque des revendications 1 et 2, dans lequel l'interrogation comprend l'instruction au contrôleur d'effectuer une procédure de découverte de topologie de réseau afin d'obtenir la topologie de réseau.

4. Appareil, comprenant
un moyen de création (110) configuré pour créer une demande de flux vers un contrôleur d'un réseau filaire pour un premier flux de données à travers le réseau filaire et un réseau sans fil, dans lequel, le réseau filaire comprend un ou plusieurs ponts, et, selon des données de configuration stockées dans l'appareil, le réseau sans fil est encapsulé vers le réseau filaire par un traducteur de sorte que le traducteur et le réseau sans fil agissent comme l'un des un ou plusieurs ponts du réseau filaire ;
un moyen d'interrogation (120) configuré pour interroger auprès du contrôleur du réseau filaire un ordonnancement pour le premier flux de données ;
un moyen de dérivation (130) configuré pour dériver, sur la base de l'ordonnancement reçu en réponse à l'interrogation pour l'ordonnancement, un indicateur de qualité d'une première session de données pour transporter un flux de données attendu dans le réseau sans fil ;
un moyen de décision (140) configuré pour décider si une seconde session de données dans le réseau sans fil doit être ajoutée afin de transporter le flux de données attendu, sur la base de l'indicateur de qualité dérivé ;
un moyen d'information (150) configuré pour informer le traducteur que la seconde session de données dans le réseau sans fil doit être ajoutée si la seconde session de données dans le réseau sans fil doit être ajoutée afin de transporter le flux de données attendu, dans lequel
le réseau filaire est un réseau TSN ;
chacun des ponts du réseau filaire est un pont TSN respectif ;
le réseau sans fil est un réseau 3GPP.

5. Appareil selon la revendication 4, comprenant en outre l'un parmi
un moyen d'interdiction configuré pour interdire de demander au contrôleur de mettre en place le premier flux de données après que l'appareil a reçu l'ordonnancement ; et
un moyen de refus configuré pour refuser vis-à-vis du contrôleur que le premier flux de données puisse être mis en place après que l'appareil a reçu l'ordonnancement.

6. Appareil selon l'une quelconque des revendications 4 et 5, dans lequel
le moyen d'interrogation est configuré pour indiquer au contrôleur que le premier flux de données ne doit pas être mis en place.

7. Appareil selon l'une quelconque des revendications 4 à 6, dans lequel
le moyen de dérivation est configuré pour dériver l'indicateur de qualité de sorte qu'il indique une qualité inférieure à une qualité maximale que le réseau sans fil peut fournir pour transporter le flux de données attendu.

8. Appareil selon la revendication 7, dans lequel
le moyen de dérivation est configuré pour dériver la qualité inférieure qui est une qualité minimisée sous une condition que le réseau sans fil soit capable de transporter le flux de données attendu.

9. Appareil, comprenant
un moyen de surveillance (210) configuré pour surveiller si une demande de flux pour un flux de données à travers un réseau filaire et un réseau sans fil est reçue, dans lequel, le réseau filaire comprend un ou plusieurs ponts, et, selon des données de configuration stockées dans l'appareil, le réseau sans fil est encapsulé vers le réseau filaire par un traducteur de sorte que le traducteur et le réseau sans fil agissent comme l'un des un ou plusieurs ponts du réseau filaire ;
un moyen de dérivation (220) configuré pour dériver une qualité que le réseau sans fil peut fournir au flux de données sur la base d'une qualité en termes de retards garantis et de débit que le réseau filaire peut fournir au flux de données, d'une configuration du réseau sans fil, d'une exigence de service de bout en bout pour le flux de données, et d'une politique sur la qualité que le réseau sans fil peut fournir au flux de données si la demande de flux est reçue ;
un moyen d'instruction (230) configuré pour ordonner au traducteur de rapporter la qualité dérivée en réponse à une demande de rapport de la qualité, dans lequel
le réseau filaire est un réseau TSN ;
chacun des ponts du réseau filaire est un pont TSN respectif ;
le réseau sans fil est un réseau 3GPP.

10. Appareil selon la revendication 9, dans lequel la politique comprend que la qualité dérivée est inférieure à une qualité maximale que le réseau sans fil peut fournir sur la base de la configuration du réseau sans fil si la qualité dérivée correspond à une exigence de qualité selon la demande de flux.

11. Procédé, comprenant
l'interrogation (S10) d'une topologie de réseau d'un réseau filaire auprès d'un contrôleur du réseau filaire, dans lequel la topologie de réseau comprend des informations topologiques et des informations sur une capacité de qualité de service du réseau filaire, et le réseau filaire comprend un ou plusieurs ponts ;
la dérivation (S20), sur la base de la topologie de réseau reçue en réponse à l'interrogation, sur la base d'une exigence de service de bout en bout pour le flux de données, et sur la base d'une demande de flux attendue pour un flux de données provenant du réseau filaire à travers un réseau sans fil, d'un indicateur de qualité du flux de données dans le réseau sans fil ;
la décision (S30) si une session de données dans le réseau sans fil doit être ajoutée afin de transporter le flux de données, sur la base de l'indicateur de qualité dérivé ;
l'information (S40) d'un traducteur que la session de données dans le réseau sans fil doit être ajoutée si la session de données dans le réseau sans fil doit être ajoutée afin de transporter le flux de données, dans lequel, selon des données de configuration stockées, le traducteur encapsule le réseau sans fil vers le réseau filaire de sorte que le traducteur et le réseau sans fil agissent comme l'un des un ou plusieurs ponts du réseau filaire, dans lequel
le réseau filaire est un réseau TSN ;
chacun des ponts du réseau filaire est un pont TSN respectif ;
le réseau sans fil est un réseau 3GPP.

12. Procédé, comprenant
la création (S110) d'une demande de flux vers un contrôleur d'un réseau filaire pour un premier flux de données à travers le réseau filaire et un réseau sans fil, dans lequel le réseau filaire comprend un ou plusieurs ponts, et, selon des données de configuration stockées, le réseau sans fil est encapsulé vers le réseau filaire par un traducteur de sorte que le traducteur et le réseau sans fil agissent comme l'un des un ou plusieurs ponts du réseau filaire ;
l'interrogation (S120) auprès du contrôleur du réseau filaire d'un ordonnancement pour le premier flux de données ;
la dérivation (S130), sur la base de l'ordonnancement reçu en réponse à l'interrogation, d'un indicateur de qualité d'une première session de données pour transporter un flux de données attendu dans le réseau sans fil ;
la décision (S140) si une seconde session de données dans le réseau sans fil doit être ajoutée afin de transporter le flux de données attendu, sur la base de l'indicateur de qualité dérivé ;
l'information (S150) du traducteur que la seconde session de données dans le réseau sans fil doit être ajoutée si la seconde session de données dans le réseau sans fil doit être ajoutée afin de transporter le flux de données attendu, dans lequel
le réseau filaire est un réseau TSN ;
chacun des ponts du réseau filaire est un pont TSN respectif ;
le réseau sans fil est un réseau 3GPP.

13. Procédé, comprenant
la surveillance (S210) si une demande de flux pour un flux de données à travers un réseau filaire et un réseau sans fil est reçue, dans lequel, le réseau filaire comprend un ou plusieurs ponts, et, selon des données de configuration stockées, le réseau sans fil est encapsulé vers le réseau filaire par un traducteur de sorte que le traducteur et le réseau sans fil agissent comme l'un des un ou plusieurs ponts du réseau filaire ;
la dérivation (S220) d'une qualité que le réseau sans fil peut fournir au flux de données sur la base d'une qualité en termes de retards garantis et de débit que le réseau filaire peut fournir au flux de données, sur la base d'une configuration du réseau sans fil, sur la base d'une exigence de service de bout en bout pour le flux de données, et sur la base d'une politique sur la qualité que le réseau sans fil peut fournir au flux de données si la demande de flux est reçue ;
l'instruction (S230) du traducteur de rapporter la qualité dérivée en réponse à une demande de rapport de la qualité, dans lequel
le réseau filaire est un réseau TSN ;
chacun des ponts du réseau filaire est un pont TSN respectif ;
le réseau sans fil est un réseau 3GPP.

14. Produit programme d'ordinateur comprenant un ensemble d'instructions qui, lorsqu'elles sont exécutées sur un appareil, est configuré pour amener l'appareil à exécuter le procédé selon l'une quelconque des revendications 11 à 13.
